# EUROPÄISCHE PATENTSCHRIFT

(11) **EP 1 393 943 B1**
(45) Veröffentlichungstag und Bekanntmachung des Hinweises auf die Patenterteilung: **09.08.2006**
(21) Anmeldenummer: 03017639.0
(22) Anmeldetag: 12.08.2003
(51) Int. Cl.: B60J 7/00

(54) **Schiebehimmel für ein Kfz-Schiebe- oder Kfz-Schiebehebedach**
Head-liner for a vehicle sliding roof
Panneau plafond pour toit ouvrant de véhicule

(30) Priorität: 02.09.2002 DE 10240390
(43) Veröffentlichungstag der Anmeldung: 03.03.2004
(73) Patentinhaber: ArvinMeritor GmbH, 63128 Dietzenbach (DE)
(72) Erfinder: Ries, Annette, 63517 Rodenbach (DE); Imgram, Bardo, 63500 Seligenstadt (DE)
(74) Vertreter: Kitzhofer, Thomas

(56) Entgegenhaltungen:
- DE-A- 19 821 358
- DE-C- 3 527 839
- DE-C- 4 326 547

## Beschreibung

Die Erfindung betrifft einen Schiebehimmel für ein Kfz-Schiebe- oder - Schiebehebedach, mit einem plattenförmigen Himmelkörper mit wenigstens einer Öffnung und einer durch die Öffnung hindurchragenden Entlüftungsleiste, die an ihrem hinteren Rand eine Aufnahmenut zur Aufnahme des Öffnungsrandes des Himmelkörpers hat.

Ein derartiger Schiebehimmel ist beispielsweise aus der DE 35 27 839 C1 oder der gattungsgemäßen DE 198 10 505 C1 bekannt. Schiebehimmel werden bei allen bekannten Schiebedachausführungen einschließlich der sogenannten Schiebe-Hebedächer eingesetzt und dienen dazu, bei geschlossenem Dach die Innenseite des Deckels abzudecken. Sie haben aber auch die Aufgabe, bei mindestens teilweise geöffnetem Deckel den Lichteinfall zu reduzieren und die Entlüftung des Fahrzeuginnenraums zu regulieren. Da sich der Schiebehimmel im sichtbaren Bereich des Fahrzeuginnenraums befindet, ist er innenseitig bezüglich seiner Oberflächenbeschaffenheit, mindestens aber in seiner Farbgebung, dem übrigen Fahrzeughimmel üblicherweise angepaßt. Er besteht beispielsweise aus einer innenseitigen Kunststoffolie oder einem Textil, das rückseitig hinterschäumt sein kann. Zur Entlüftung ist üblicherweise eine Entlüftungsleiste, welche üblicherweise ein einteiliges Kunststoff-Spritzgußteil darstellt, in eine oder mehrere Öffnungen im Himmelkörper eingesetzt. Die Entlüftungsleiste hat darüber hinaus üblicherweise eine Griffmulde, mit der der Schiebehimmel vom Insassen erfaßt und längs einer dachseitigen Führung verschoben werden kann. Da Entlüftungsleiste und Himmelkörper eine geringe Biegesteifigkeit haben, muß ausgeschlossen werden, daß der Öffnungsrand dann aus der Aufnahmenut herausgedrückt wird, wenn der Insasse zu stark an der Entlüftungsleiste drückt oder zieht, was sogar dazu führen könnte, daß Entlüftungsleiste und Himmelkörper voneinander getrennt werden. Um dies zu verhindern, sind Lösungen angedacht, den Himmelkörper im Bereich des Öffnungsrandes starrer auszubilden, indem zum Beispiel ein Lochblech in den Himmelkörper eingebettet wird. Dies erhöht jedoch den Herstellungsaufwand, das Gewicht und die Kosten des Schiebehimmels.

Die Erfindung schafft einen Schiebehimmel, der auf einfache, kostengünstige Weise eine Relativbewegung zwischen Himmelkörper und Entlüftungsleiste im Bereich der Aufnahmenut weitgehend oder vollständig verhindert. Dies wird bei einem Schiebehimmel der eingangs genannten Art dadurch erreicht, daß zusätzlich zur Aufnahmenut noch wenigstens eine Rastverbindung am hinteren Rand der Entlüftungsleiste vorgesehen ist, die einer Herausbewegung des Öffnungsrandes aus der Aufnahmenut entgegenwirkt. Beim erfindungsgemäßen Schiebehimmel ist eine zusätzliche Sicherung im Bereich der Aufnahmenut vorgesehen, nämlich in Form einer Rastverbindung. Die Rastverbindung wird nicht durch die Aufnahmenut gebildet, sondern stellt einen separaten Abschnitt der Entlüftungsleiste dar. Der Öffnungsrand umgibt die Entlüftungsleiste auf deren gesamten Umfang.

Beispielsweise sind einer oder mehrere Rasthaken einstückig an der Entlüftungsleiste, insbesondere am oberen Steg der Aufnahmenut einstückig angeformt. Der oder die Rasthaken greifen dann in eine entsprechende Gegenstruktur im geschäumten Abschnitt des Himmelkörpers.

Der oder die Rasthaken bewegen sich gemäß der bevorzugten Ausführungsform beim Einrasten in einer Ebene, die im wesentlichen parallel zur Ebene ist, die durch die Aufnahmenut definiert ist, also parallel zur Ebene, in der der Öffnungsrand in die Aufnahmenut eingeschoben wird.

Dies stellt sicher, daß die Rastverbindung sich nicht durch Biegen der Entlüftungsleiste und des Himmelkörpers sö verformt, daß ein Entrasten leicht möglich ist.

Die Entlüftungsleiste erhöht aufgrund der erfindungsgemäßen Konstruktion die Biegesteifigkeit des Schiebehimmels, indem die beiden Teile besser miteinander verbunden werden, so daß im Bereich der Entlüfungsleiste keine Verstärkungseinlage mehr im Himmelkörper notwendig ist.

Weitere Merkmale und Vorteile der Erfindung ergeben sich aus der nachfolgenden Beschreibung und den Zeichnungen. In den Zeichnungen zeigen:
- Figur 1 eine perspektivische Unteransicht des erfindungsgemäßen Schiebehimmels,
- Figur 2 eine Längsschnittansicht durch den Schiebehimmel nach Figur 1,
- Figuren 3A bis 6A perspektivische Ansichten vier verschiedener Ausführungsformen der Rastverbindung im Bereich des hinteren Randes der Entlüftungsleiste und
- Figuren 3B bis 6B Schnittansichten durch die Abschnitte der Entlüftungsleiste und des Himmelkörpers, die in den Figuren 3a bis 6a dargestellt sind.

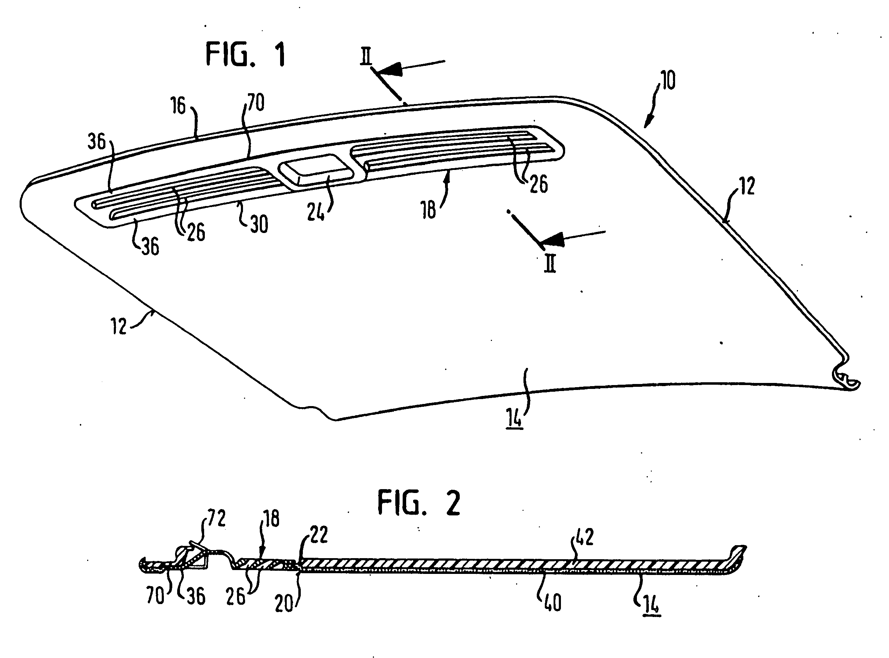

In Figur 1 ist der Schiebehimmel eines Kfz-Schiebe- oder -Schiebehebedachs 10 dargestellt, der unterhalb eines Deckels zum Verschließen eines Dachausschnitts längsverschiebbar geführt ist. Dies erfolgt dadurch, daß die Seitenränder 12 in nicht gezeigten Führungsschienen aufgenommen werden.

Der Schiebehimmel 10 besteht im wesentlichen aus zwei Teilen, nämlich einem großflächigen, plattenförmigen Himmelkörper 14 und einer nahe des vorderen Randes 16 des Himmelkörpers 14 mit ihm verbundene Entlüftungsleiste 18, die vorzugsweise aus einem Teil hergestellt ist. Der Himmelkörper 14 hat eine oder mehrere längs des Randes 16 verlaufende Öffnungen 20, die von einem Öffnungsrand 22 des Himmelkörpers begrenzt sind. Die Entlüftungsleiste 18 ist im Bereich des Öffnungsrandes 22 mit dem Himmelkörper 14 verbunden und ragt durch die Öffnung 20 hindurch. Die Entlüftungsleiste 18 hat in ihrer Mitte eine eingeformte Griffmulde 24, an der der Insasse angreifen und den Schiebehimmel verfahren kann. Darüber hinaus sind schlitzförmige Entlüftungsöffnungen 26 in der Entlüftungsleiste 18 ausgeformt.

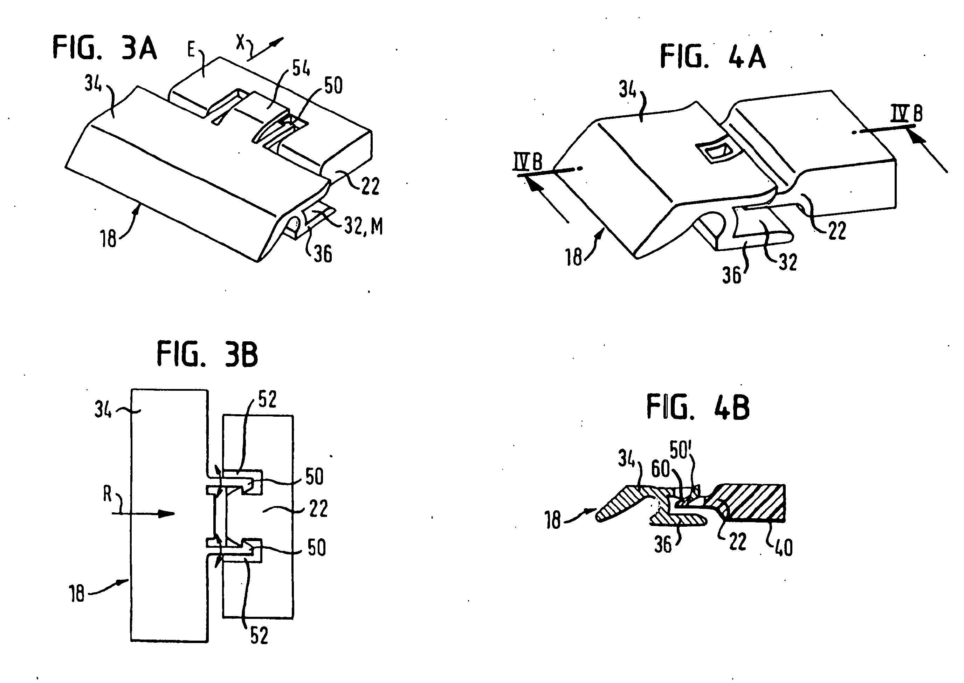

Die Entlüftungsleiste 18 besitzt an ihrem hinteren Rand 30, und zwar vorzugsweise über die gesamte Länge des hinteren Rands 30, eine im Querschnitt U-förmige Aufnahmenut 32, die insbesondere in den Figuren 3 bis 6 gut zu erkennen ist. Die Aufnahmenut 32 wird durch einen oberen und einen unteren Steg 34 bzw. 36 definiert, die einstückig an die Entlüftungsleiste 18 angeformt sind. Der untere Steg 36 verläuft um den gesamten äußeren Rand der Entlüftungsleiste 18 herum und liegt an der Unterseite des Öffnungsrands 22 an.

Der Himmelkörper 14 besteht aus einer Folie oder einem Textil 40 und einer PU-Schicht 42. Im Bereich des hinteren Randes 30 der Entlüftungsleiste 18 läuft der Öffnungsrand 22 zu, sein innerer Abschnitt ragt in die Aufnahmenut 32.

Zur zusätzlichen Sicherung des Öffnungsrands 22 in der Aufnahmenut 32 sind im Bereich des Randes 30 mehrere Rastverbindungen vorgesehen, die exemplarisch in den Figuren 3 bis 6 dargestellt sind.

Den Ausführungsformen gemeinsam ist, daß einstückig an den oberen Steg 34 Rasthaken angeformt sind, die erst bei Eindringen des Öffnungsrands 22 in die Aufnahmenut 32 in eine entsprechende Geometrie in dem Himmelkörper 14 einschnappen. Die Rastverbindungen dienen dazu, einer Herausbewegung des Öffnungsrandes 22 aus der Aufnahmenut 32 entgegenzuwirken, insbesondere wenn der Insasse nach Erfassen der Griffmulde 24 die Entlüftungsleiste 18 nach oben drückt oder nach unten zieht.

Die Figuren 3A und 3B zeigen zwei Rasthaken 50, deren hakenförmige, freie Enden aufeinander zugewandt sind und die sich über den oberen Steg 34 hinaus in einer durch die Aufnahmenut 32 definierten Einsteckebene (M) zum Öffnungsrand 22 erstrecken. Im dickeren Abschnitt des Öffnungsrandes 22 sind zwei gegeneinander gerichtete, R-förmige Ausnehmungen 52 vorgesehen, die in Einsteckrichtung R eine Hinterschneidung aufweisen, in die das freie Ende des Hakens 50 einschnappt. Zwischen den Haken 50 ist als weitere Sicherung ein großflächiger Lappen 54 an dem oberen Steg 34 angeformt, der auf die Oberseite des Öffnungsrandes 22 drückt.

Wird die Entlüftungsleiste 18 zum Beispiel nach unten gezogen, bewirken die Haken 50, daß der Öffnungsrand 22 nicht in Richtung X aus der Aufnahmenut 32 herausbewegt werden kann. Die Haken 50 verhindern sogar jegliche Bewegung von Himmelkörper 14 und Entlüftungsleiste 18 in Richtung X. Die Wirkung der Rasthaken 50 ist deshalb auch so vorteilhaft, weil sie sich beim Einrasten in einer Ebene E bewegen, die parallel zu der durch die Aufnahmenut 32 gebildeten Einsteckebene M und senkrecht zur Krafteinleitung durch den Insassen verläuft. Die Ebene E ist die horizontale Schnittebene, also die Zeichenebene gemäß Figur 3B.

Bei der Ausführungsform nach den Figuren 4A und 4B ist ein U-förmiger Abschnitt im oberen Steg 34 vorgesehen, der einen Rasthaken 50' bildet, der mit einem annähernd komplementär gebildeten Abschnitt 60 am Öffnungsrand 22 verrastet.

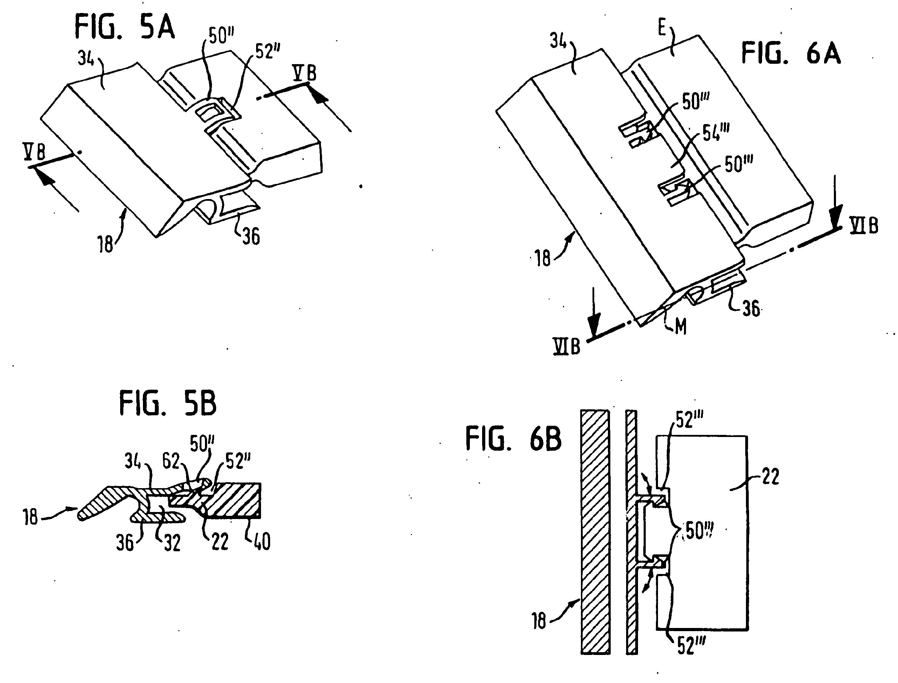

Die Ausführungsform nach den Figuren 5A und 5B entspricht im wesentlichen der in den Figuren 4A und 4B gezeigten, wobei der O-förmige Rasthaken 50" eine komplementäre Ausnehmung 52" im verdickten Teil des Öffnungsrandes 22 hat. Die Ausnehmung 52" umgibt einen hakenförmigen, nach oben gerichteten Fortsatz 62 am Rand 22, der in das Innere des Rasthakens 50" rutscht, wenn der Öffnungsrand 22 in die Aufnahmenut 32 eingeschoben worden ist.

Die in den Figuren 6A und 6B dargestellte Ausführungsform entspricht im wesentlichen der in Figur 3A und 3B dargestellten Ausführungsform, mit dem Unterschied, daß die Ausnehmungen 52"' im dünneren, inneren Abschnitt des Öffnungsrandes 22 liegen und vorzugsweise als Durchgangsöffnungen ausgebildet sind. Die Haken 50"' sind im oberen Steg 34 ausgeformt und stehen nicht gegenüber diesem seitlich vor, wie bei Figur 3A zu sehen. Dies gilt auch für den Lappen 54"'. Die Rasthaken 50"' haben jedoch eine größere Dicke als der obere Steg 34 und der Lappen 54"', wie im Horizontalschnitt gemäß Figur 6B zu sehen ist.

Die Montage der Entlüftungsleiste 18 in der Öffnung 20 erfolgt dadurch, daß, mit Bezug auf Figur 2, die Entlüftungsleiste 18 von vorne in die Öffnung 20 eingeschoben wird, bis der Öffnungsrand 22 in die Aufnahmenut 32 eingedrungen ist und die Rastverbindungen geschlossen werden. Anschließend wird die Entlüftungsleiste 18 im Bereich ihres vorderen Randes 70 nach oben geschwenkt, bis an der Entlüftungsleiste 70 angeformte Rastnasen 72, die ebenfalls eine Rastverbindung bilden, die Oberseite des Himmelkörpers 14 erreicht haben.

Durch die sich fast über die gesamte Breite des Himmelkörpers 14 erstreckende Lüftungsleiste 18 erhält der Schiebehimmel insgesamt eine relativ hohe Steifigkeit, so daß keine Verstärkungseinlagen in den Himmelkörper 14 an seinem vorderen, quer verlaufenden Rand 16 und am Öffnungsrand 22 eingebettet werden müssen.

### Bezugszeichenliste

- 10: Schiebehimmel
- 12: Seitenränder
- 14: Himmelkörper
- 16: Rand
- 18: Entlüftungsleiste
- 20: Öffnungen
- 22: Öffnungsrand
- 24: Griffmulde
- 26: Entlüftungsöffnungen
- 3 0: Rand
- 32: Aufnahmenut
- 34: oberer Steg
- 36: unterer Steg
- 40: Textil
- 42: PU-Schicht
- 50-50'": Rasthaken
- 52-52"': Ausnehmungen
- 54-54"': Lappen
- 60: Abschnitt
- 62: Fortsatz
- 70: Rand
- 72: Rastnase

## Patentansprüche

1. Schiebehimmel für ein Kfz-Schiebe- oder -Schiebehebedach, mit einem plattenförmigen HimmelKörper (14) mit wenigstens einer Öffnung (20) und einer durch die Öffnung hindurchragenden Entlüftungsleiste (18), die an ihrem hinteren Rand (30) eine Aufnahmenut (32) zur Aufnahme des Öffnungsrandes (22) des Himmelkörpers (14) hat,
**dadurch gekennzeichnet, daß**
zusätzlich zur Aufnahmenut (32) noch wenigstens eine Rastverbindung am hinteren Rand (30) der Entlüftungsleiste (18) vorgesehen ist, die einem Herausbewegen des Öffnungsrandes (22) aus der Aufnahmenut (32) entgegenwirkt.

2. Schiebehimmel nach Anspruch 1, **dadurch gekennzeichnet, daß** wenigstens ein Rasthaken (50; 50'; 50"; 50"') einstückig an der Entlüflungsleiste (18) angeformt ist.

3. Schiebehimmel nach Anspruch 1 oder 2, **dadurch gekennzeichnet, daß** wenigstens ein Rasthaken (50; 50'; 50"; 50"') an einem oberen Steg (34) der Aufnahmenut (32) einstückig angeformt ist.

4. Schiebehimmel nach einem der vorhergehenden Ansprüche, **dadurch gekennzeichnet, daß** sich Rasthaken (50; 50'") beim Einrasten in den Himmelkörper (14) in einer Ebene (E) bewegen, die im wesentlichen parallel zu einer durch die Aufnahmenut (32) definierten Einsteckebene (M) verläuft.

5. Schiebehimmel nach einem der vorhergehenden Ansprüche, **dadurch gekennzeichnet, daß** Rasthaken (50; 50'; 50"; 50'") und der Öffnungsrand (22) so ausgebildet sind, daß die Verrastung erst nach Eindringen des Öffnungsrandes (22) in die Aufnahmenut (32) erfolgt.

6. Schiebehimmel nach einem der vorhergehenden Ansprüche, **dadurch gekennzeichnet, daß** der Himmelkörper (14) an seinem vorderen, quer verlaufenden Rand (16) und am Öffnungsrand (22) keine Verstärkungseinlage hat.

## Claims

1. A sliding roof liner for a vehicular sliding roof or sliding/lifting roof, comprising a plate-shaped lining body (14) with at least one opening (20) and a ventilation bar (18), the latter projecting through the opening and having its rear edge (30) provided with a receiving groove (32) for receiving the opening edge (22) of the lining body (14),
**characterised in that**
in addition to the receiving groove (32) there is provided at least one latching connection at the rear edge (30) of the ventilation bar (18), the latching connection counteracting a movement of the opening edge (22) out of the receiving groove (32).

2. The sliding roof liner according to claim 1, **characterised in that** at least one latching hook (50; 50'; 50"; 50"') is integrally formed on the ventilation bar (18).

3. The sliding roof liner according to claim 1 or 2, **characterised in that** at least one latching hook (50; 50'; 50"; 50"') is integrally formed on an upper web (34) of the receiving groove (32).

4. The sliding roof liner according to any of the preceding claims, **characterised in that** latching hooks (50; 50"') move in a plane (E) during latching in place in the lining body (14), this plane essentially extending in parallel with an insertion plane (M) defined by the receiving groove (32).

5. The sliding roof liner according to any of the preceding claims, **characterised in that** latching hooks (50; 50'; 50"; 50"') and the opening edge (22) are designed such that the action of latching occurs not until the opening edge (22) has penetrated the receiving groove (32).

6. The sliding roof liner according to any of the preceding claims, **characterised in that** the lining body (14) has no reinforcement insert at its front, transverse edge (16) and its opening edge (22).

## Revendications

1. Ciel coulissant pour un toit ouvrant ou coulissant/basculant d'un véhicule automobile, comportant un corps de ciel (14) en forme de plaque avec au moins une ouverture (20) et une baguette d'aération (18) faisant saillie à travers l'ouverture, laquelle a sur son bord (30) postérieur une gorge de réception (32) pour recevoir le bord d'ouverture (22) du corps de ciel (14),
**caractérisé en ce que**
additionnellement à la gorge de réception (32), il est encore prévu sur le bord (30) postérieur de la baguette d'aération (18) une liaison par enclenchement qui s'oppose à ce que le bord d'ouverture (22) se déplace hors de la gorge de réception (32).

2. Ciel coulissant selon la revendication 1, **caractérisé en ce qu'**au moins un crochet d'enclenchement (50 ; 50' ; 50" ; 50"') est moulé d'un seul tenant sur la baguette d'aération (18).

3. Ciel coulissant selon la revendication 1 ou 2, **caractérisé en ce qu'**au moins un crochet d'enclenchement (50 ; 50' ; 50" ; 50"') est moulé d'un seul tenant sur une traverse supérieure (34) de la gorge de réception (32).

4. Ciel coulissant selon l'une des revendications précédentes, **caractérisé en ce que** lorsqu'ils s'enclenchent dans le corps de ciel (14), des crochets d'enclenchement (50 ; 50"') se déplacent dans un plan (E) qui s'étend sensiblement parallèlement à un plan d'enfichage (M) défini par la gorge de réception (32).

5. Ciel coulissant selon l'une des revendications précédentes, **caractérisé en ce que** des crochets d'enclenchement (50 ; 50' ; 50" ; 50"') et le bord d'ouverture (22) sont réalisés de telle sorte que l'enclenchement a lieu seulement après que le bord d'ouverture (22) ait pénétré dans la gorge de réception (32).

6. Ciel coulissant selon l'une des revendications précédentes, **caractérisé en ce que** le corps de ciel (14) n'a pas d'insert de renforcement sur son bord antérieur s'étendant transversalement et sur le bord d'ouverture (22).
